# EUROPEAN PATENT SPECIFICATION

(11) **EP 2 931 991 B1**
(45) Date of publication and mention of the grant of the patent: **29.09.2021**
(21) Application number: 13818768.7
(22) Date of filing: 16.12.2013
(51) Int. Cl.: E04B 2/74, E04B 1/94, H02G 3/04

(54) **FIRE RESISTANT STRUCTURE**
FEUERSICHERE STRUKTUR
STRUCTURE IGNIFUGE

(30) Priority: 14.12.2012 GB 201222572
(43) Date of publication of application: 21.10.2015
(73) Proprietor: Darchem Engineering Limited, Stockton-on-Tees, Cleveland TS21 1LB (GB)
(72) Inventor: MURRAY, Keith, Stockton-on-Tees Cleveland TS21 1LB (GB)
(74) Representative: McWilliams, David John
(86) International application number: PCT/GB2013/053309
(87) International publication number: WO 2014/091253

(56) References cited:
- EP-A2- 2 434 068
- WO-A1-95/00723
- GB-A- 2 245 621
- JP-A- H10 237 996
- US-A- 3 835 611
- US-A- 5 834 120
- US-A1- 2009 044 480

## Description

### FIELD OF THE INVENTION

The present invention relates to a fire resistant structure, in particular, a firewall and/or a fire resistant ceiling, a kit of parts for forming a fire resistant structure, a fire door and/or a method of assembly and/or modification of a fire resistant structure.

### BACKGROUND OF THE INVENTION

Fire resistant structures such as firewalls and fire resistant ceilings are required in many buildings to restrict the spread of fire. There are generally two types of firewalls; concrete firewalls and composite firewalls. Concrete firewalls may be found, for example, in a nuclear power station. Composite firewalls generally include an insulation material sandwiched between two cladding layers. To construct a firewall, steelwork, e.g. steel joists, are required to support the firewall. In the example of a composite firewall, the cladding is nailed to the steelwork. The fire standard required depends on the environment in which the firewall is used, but for example, in a nuclear power station it is likely that the firewall will need to resist heat transfer through the wall (up to a maximum of 181°C) for 3 hours.

Currently firewalls and/or fire resistant ceilings are built as permanent structures and as such are not designed to be adaptable. However, on occasions it may be desirable to modify a firewall, for example to pass a conduit for wiring or pipes through the wall, or to create a space to hang a fire door. Conventional firewalls are difficult to modify, either because modification requires removal of concrete from the wall or cutting through cladding, clearing insulation, and ensuring that the modifications do not cause any heat leakages, which can be difficult.

Moreover, the requirement of specific steelwork means that it can be difficult to erect a firewall in an already erected building, without substantial building work being undertaken. Examples of known fire resistant structures are disclosed in EP2434068, US2009/044480, WO95/00723, GB2245621 and JPH10237996.

### SUMMARY OF THE INVENTION

The present invention aims to address one or more problems associated with the prior art.

The invention provides a firewall according to claim 1.

Using a modular system (i.e. a plurality of frame units attached together) to form a frame structure for the firewall or fire resistant ceiling provides increased flexibility compared to firewalls of the prior art. For example, the modular system permits a user to remove one or more of the frame units and associated fire resistant panels to add a door way to a firewall or provide a conduit for cables, wires or pipes through the firewall or fire resistant ceiling.

The term "fire-facing" should be interpreted as meaning on the 'threat' side of the fire resistant structure, or in front of the area to be protected from the effects of fire. It will be understood that, for some embodiments and applications, the fire resistant structure may be positioned between two potential 'threat' zones, and therefore may require two fire-facing faces, e.g. with the front and rear of the substructure fitted with one or more of said fire resistant panels.

By using fire resistant panels to clad and thereby cover the fire-facing face(s) of the substructure, the frame units are in effect protected from the direct effects of a fire, meaning that the risk of overheating of the frame units is reduced (compared to the prior art in which it is common to provide fire resistant panels or material on the inside of a fire-resistant structure). The risk of bowing of the fire resistant structure is therefore also reduced, which helps to avoid or mitigate loadings at the perimeter of the fire resistant structure. The fire resistant structure may form a partitioning wall in a building, for example, e.g. extending between the floor and ceiling of the building.

Each frame unit defines a void behind the fire-resistant panel(s). Hence, if the frame units are clad on the front and rear, a hollow region is formed between the front and rear faces of each frame unit. Unlike firewalls of the prior art, no insulation material is provided in the hollow region in the exemplary embodiments. This has several advantages, such as easing the assembly process and making it easy to modify the fire resistant structure. Furthermore, in cases where electrical wiring or cables are intended to be run within the fire resistant structure, the absence of insulation material avoids or mitigates adverse effects on the current flow in the electrical wires or cables.

The or each fire resistant panel may be an insulation board. The fire resistant panel may comprise an endothermic-reactive insulating fibrous material. These types of materials have been found to have improved insulating properties than materials used to form heat resistant panels of the prior art. In exemplary embodiments, the insulating fibrous material includes: (i) an inorganic endothermic filler which undergoes multiple endothermic reactions between the range of 100°C and 750°C; (ii) inorganic fiber material; and (iii) an inorganic polymer binder. Such a material is breathable under normal (non-fire) conditions, which means that when the wall includes a hollow region, electrical cable can be run inside the firewall or ceiling without affecting or with limited effect on electrical current.

The inorganic endothermic filler may be an hydrated compound and at least one of endothermic reactions may comprise dehydration. The hydrated inorganic compound may be in combination with a fibrous component and the ratio of inorganic endothermic component to fibre may be between 0.25 and 3.0.

The endothermic inorganic compound may dehydrate in a first endothermic reaction and then may emit an inert gas on further heating in a second endothermic reaction. The inert gas can increase the insulating effect of the heat resistant panel, i.e. the material can be breathable when required (i.e. in non-fire situations) and then in fire situations reactions can occur to provide the necessary insulating effect.

The dehydration reaction may release water vapour. The inorganic compound may be a hydrated carbonate. In such embodiments, the inorganic compound may react firstly to release the water of hydration, and secondly to release carbon dioxide as in the following chemical equations for a bivalent metallic element M:

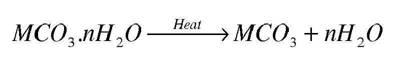

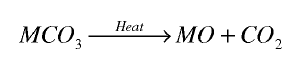

The carbon dioxide released in the second endothermic mechanism is inert and therefore will tend to further stifle any fire which may exist. The endothermic reactions may continue to absorb heat from the surroundings up to 750°C. The endothermically reactive inorganic compound may be Magnesium Carbonate-Hydrate optionally in combination with Magnesium Calcium Carbonate. This may be supplemented with 1-2% hydrated Zinc Borate or Zinc Stanate, 3-5% crude Vermiculite. The weight ratio of endothermic filler of part (i) to the inorganic fibre of part (ii) may be in the range of 0.25 to 3.0. The filler may have a particle top size of >150 micrometers. The weight ratio of organic to inorganic constituents is may be less than 0.2.

The fire resistant structure may comprise an expandable gasket. The gasket may be positioned to extend along one or more perimeter side faces of each frame unit, for restricting heat flow to neighbouring frame units. Such an arrangement helps to limit hot air movement to within the extremities of each frame unit.

In the invention, the substructure has first and second frame units, one above the other, and the gasket is, in effect, sandwiched between the upper and lower units. This has been found to greatly reduce heat accumulation in an upper region of the firewall. If the firewall includes multiple frame units, one on top of another, the use of a gasket positioned between each pair of units prevents or mitigates internal convection taking place over the full or near full height of the firewall (which in some embodiments may be 10m or more high). This reduces heat accumulation in an upper region of the firewall and significantly reduces or removes the risk of formation of hot spots in the firewall or ceiling.

In exemplary embodiments, the frame units comprise a plurality of holes along a perimeter side face, for providing a position of attachment to another frame unit or external structure and/or for reducing heat build-up in the frame unit. The holes may be used in attachment or the holes may, in use, be free from fasteners, in such cases the holes reduce heat transfer through the frame structure. When holes are free from fasteners, said holes can be used to route cables and pipes across and through the fire resistant structure, which enables the cables and pipes to be protected from damage due to the fire for a longer period of time than achieved with conventional firewalls. The fire resistant structure may be configured for attachment via fasteners to one or more external structures, e.g. a concrete structure. Such a configuration provides more flexibility than the prior art because the positioning of the firewall or ceiling is not dependent upon the required steelwork being in place from which the firewalls of the prior art are suspended.

The frame units may comprise a series of larger diameter holes and a series of smaller diameter holes along a side face. The larger diameter holes may be intended for attachment to an external structure. The larger holes may be dimensioned for attachment to an external structure using a plurality of plates and bolts. For example, the fire resistant structure may comprise a plurality of plates and fasteners, the plates being dimensioned to have a width greater than the diameter of the larger hole, the fastener and plates being used to attach the fire resistant structure to an external structure. Use of the larger diameter holes for attachment in such a way means that the accuracy required for connection of the fire resistant structure to an external structure is significantly reduced, compared to using a simple bolt and hole arrangement. In tests, some embodiments of the invention using such a connection to an external structure, have been found to have improved performance in seismic tests compared to firewalls of the prior art. The larger holes may be axially aligned. The smaller holes may be interspaced between the larger holes, for example, four smaller holes may surround each larger hole.

Each frame unit may comprise a series of holes at the perimeter of a front and/or rear face of the frame unit (i.e. distinct from the holes provided around the perimeter side faces or end faces of the units). One or more of said holes may receive a fastener to attach one of the fire resistant panels to said frame unit. The fastener may be a threaded fastener. A threaded fastener is generally easier to remove and replace than other types of fasteners, e.g. the nails used in firewalls of the prior art, which contributes to the ease of modification of the fire resistant structure. The one or more fasteners may extend through one of the fire resistant panels to suspend the fire resistant panel to the frame unit. A ferrule may be positioned through the fire resistant panel at a position coincident with the fastener so as to reduce or prevent direct contact of the fastener with the fire resistant panel. The use of a ferrule eases placement and removal of the fastener and protects the fire resistant panel from damage.

The frame units are made from metal, for example steel.

The heat resistant structure may comprise a heat resistant seal positioned between the frame units and fire resistant panels. The heat resistant seal may be positioned around a perimeter of each frame unit. The heat resistant seal may be dimensioned to overlap an adjacent frame unit so as to prevent heat leakage between fire resistant panels. Such arrangement of the heat resistant seal removes the need to overlap the fire resistant panels so as to avoid or reduce heat leakage at the joints of the fire resistant panels.

The fire resistant structure may require two opposing faces, both capable of being fire-facing. Hence, the fire resistant structure may comprise at least one fire resistant panel on the front and rear of the substructure. In alternative embodiments, fire resistant panels are clad to one side of the substructure, and non-fire resistant panels are clad to the opposite side of the substructure, such that only one side of the fire resistant structure is intended to be fire-facing.

In exemplary embodiments, each frame unit may be formed from two or more frame members folded from a flat-pack configuration. Using a flat-pack configuration eases transportation of the components for construction of the fire resistant structure.

Each frame member may be folded to form two perimeter sides of a frame unit, such that two frame members when fastened together (e.g. by screws or bolts) form a frame unit of continuous perimeter. Alternatively, each frame member may form one, three or four perimeter sides of a frame unit. The frame member may be an elongate member that can be folded to an L-shape. The frame member may comprise two portions that can be folded to form part of the front or rear of the frame unit.

In the invention, each frame unit may be square or rectangular in shape. The frame unit may include a corner brace at each corner of the frame unit to improve the stability of the frame unit.

The fire resistant structure may comprise one or more cover panels positioned over the fire resistant panels to cover a fire-facing face of the fire resistant structure. The cover panels provide protection for the heat resistant panel and can provide a surface that has better characteristics for use e.g. improved appearance, improved feel and/or waterproof.

The fire resistant structure may comprise two or more layers of heat resistant panels clad to a single fire facing face of the fire resistant structure. Additional layers of heat resistant panels enable the firewall to be used with different types of fire (e.g. cellulose in building and power stations, and hydrocarbon in petrochemical/oil and gas environments) and for different required durations (e.g. 30 minutes, 1 hour, 90 minutes, 2 hours, etc).

The fire resistant structure may be a firewall configured to extend around a corner. In such an embodiment, a corner member of hollow cross section may connect two or more of the frame units to create the required angle in the firewall. The corner member may have a square cross section. The corner member may comprise a series of holes formed through the sides thereof.

The fire resistant structure is a firewall and the firewall may comprise door frame members provided to support a fire door in the firewall. The door frame members may have a hollow cross section. The door frame members may comprise holes along the length thereof.

In a preferred embodiment the fire resistant panels comprise an endothermic-reactive insulating fibrous material.

Endothermic-reactive insulating fibrous material have been found to have improved insulating properties than standard materials used to form heat resistant panels. Accordingly, adapting the use of the material (it is not known to use such materials for firewalls) to form a panel that is suitable for use in a firewall can improve the performance of a firewall compared to firewalls of the prior art.

The insulating fibrous material may include: (i) an inorganic endothermic filler which undergoes multiple endothermic reactions between the range of 100°C and 750°C; (ii) inorganic fiber material; and (iii) an inorganic polymer binder. Such a material is breathable under normal (non-fire) conditions, which means that when the wall includes hollow portions, electrical cable can be run inside the firewall or ceiling without affecting or with limited effect on electrical current.

The frame structure comprises a plurality of frame units, e.g. first and second frame units attached to one another. Each panel may be configured to cover the front and or rear face of a respective frame unit.

Each frame unit comprises a void intended to define a hollow region behind the front and rear faces of the frame structure.

The fire resistant structure of the second aspect may have any one of, or any combination of, the optional features of the fire resistant structure of the first aspect.

### BRIEF DESCRIPTION OF THE DRAWINGS

Embodiments of the invention will now be described with reference to the accompanying drawings, in which:
Figure 1 shows a perspective view of an assembled firewall connected to an external structure;
Figure 2 shows a perspective exploded view of the firewall of Figure 1;
Figure 2A shows a detail view of the encircled section of Figure 2;
Figure 3 shows a perspective view of an assembled frame structure of the firewall of Figure 1;
Figure 4 shows a perspective exploded view of a frame unit forming part of the frame structure of Figure 3;
Figure 5 shows a flat-pack frame member of the frame unit of Figure 4;
Figure 6 shows a perspective partially exploded view of two frame units of Figure 4 and a corner frame member;
Figure 7 shows a perspective view of a fire door without the door furniture; and
Figure 8 shows a perspective view of an assembled frame structure of the fire door of Figure 7.

### DETAILED DESCRIPTION OF EMBODIMENT(S)

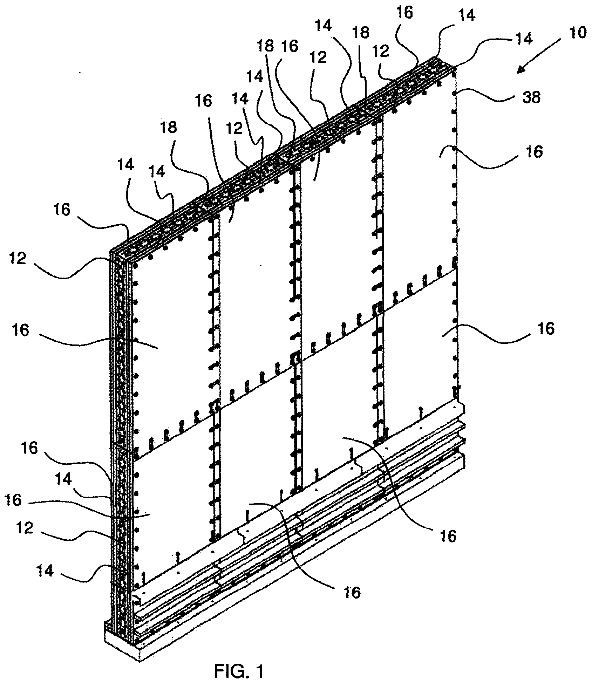

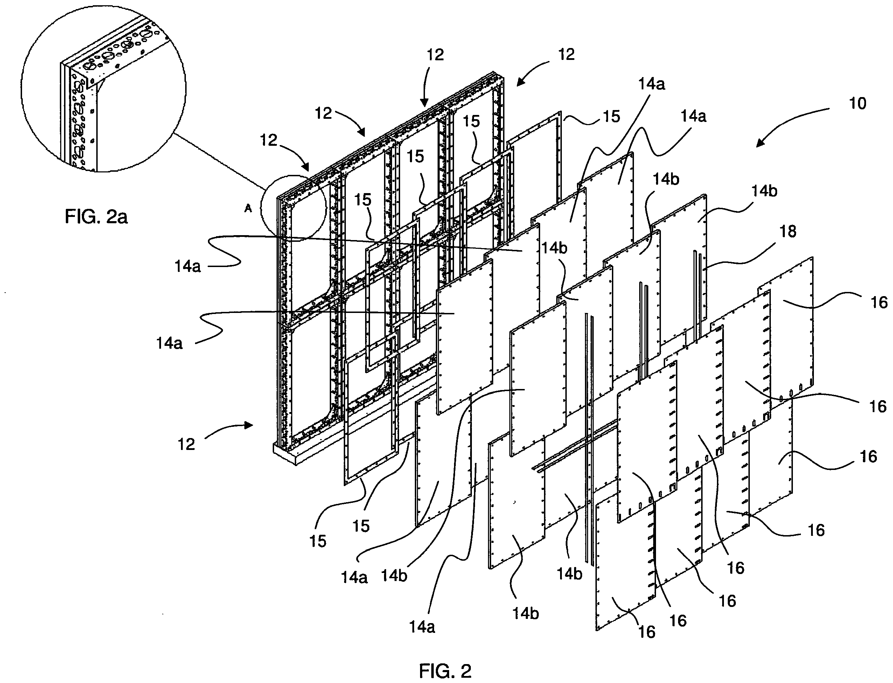

Referring to Figures 1 and 2, a firewall is indicated generally 10. A plurality of frame units 12 are attached together to form a substructure of the firewall 10. Two coincident fire resistant panels 14a, 14b are clad to each one of the frame units 12. The fire resistant panels 14a 14b restrict heat flow through the firewall 10. The fire resistant panels 14a, 14b are clad to a fire-facing side of the firewall 10, so as to reduce heat flow to the frame units 12. This reduces bowing of the substructure and therefore loadings at a perimeter of the firewall 10 are reduced. In alternative embodiments, only one fire resistant panel may be used, or in further alternative embodiments three or more fire resistant panel layers may be used. The number of fire resistant panels can be varied depending on the fire protection required, e.g. the fire protection duration and/or the type of fire (e.g. cellulose as in buildings and power stations, and hydrocarbon as in petrochemical/oil and gas).

A cover panel 16 is positioned over each of the outer most fire resistant panels 14b. In this embodiment the cover panel 16 is made from a powder coated carbon steel, but in alternative embodiments any suitable material may be used. The cover panel 16 provides a finish to the firewall 10 which is both protective of the fire resistant panel 14b and a more desirable material for an external surface of a wall in a building.

An expandable gasket 18 is positioned between each of the attached frame units 12. The expandable gasket 18 is positioned so as to overlay the sides of the frame units 12 that are in contact with other frame units, such that each frame unit 12 is surrounded by gasket 18. The gasket limits heat conduction between frame units 12, which in turn limits any air movement to within the extremities of each frame unit. Limiting air movement to within the extremities of each frame unit can help to reduce hot spots. Particularly, important for contributing to the reduction of hot spots is the gasket 18 arranged between upper and lower frame units, which prevents or mitigates against internal convection taking place over the full height of the firewall, thereby reducing the tendency for hot spots to occur in an upper region of the firewall 10. In some embodiments the firewall may be up to 10 m or more in height, and this arrangement of gaskets (i.e. sandwiched between upper and lower frame units) prevents internal convection taking place over the full height of the firewall.

A heat seal, e.g. refractory paper 15, is positioned around a perimeter of the front face of each frame unit 12 and between the heat resistant panel 14 and the frame unit 12. This heat seal is dimensioned to overlap with the front face of adjacent frame units 12, so as to restrict heat leakage at the point of abutment of the heat resistant panels 14a, 14b.

In this embodiment, the firewall has two fire-facing faces, and so fire resistant boards 14a, 14b and cover boards 16 are clad to both the front and rear (as viewed in Figure 1) of each frame unit 12. However, in alternative embodiments, the firewall may only have one fire-facing face, i.e. fire resistant boards 14a, 14b are only clad to one face of the frame unit 12. In such an embodiment, a non-fire resistant panel, or just a cover panel may be clad to the other face of the firewall. In the present invention, the heat resistant panels 14a, 14b and cover panels 16 are coincident with the frame units 12, i.e. so that a first set of panels 14a, 14b, 16 is configured to cover a first frame unit and a second set of panels 14a, 14b, 16 is configured to cover a second frame unit. However, in alternative embodiments the heat resistant panel and cover panels may be clad to the frame units using any appropriate configuration.

In this embodiment, the heat resistant panels are formed using the fire protection material described in US5834120, and the following is a brief summary of the material. The fire resistant panel includes organic fibres, inorganic endothermic material and organic binder. The inorganic fibres are refractory materials which combine high strength together with good thermal resistance and the ability to withstand thermal shock. The fibres form a matrix for retaining high levels of the endothermic filler in interstices between fibres. Suitable fibres for this purpose are silica, alumino-silicate and glass fibre or other fibres often classified as MMVF, in this embodiment the fibre is aluminosilicate. The mean fibre diameter should be in the range 1 to 8 micrometers with a full range of 0.5 to 12 micrometers and an original maximum fibre length of up to 150 mm. The fibre content may be 20-40%.

The inorganic endothermic material is in the form of a powder with a topside >250 micrometers. The endothermic material filler is able to provide multiple endothermic reactions across a temperature spectrum from 100°C to 750°C, and includes hydrated magnesium carbonate. The loss on ignition for the endothermic material should be >50% by weight. The weight ratio of endothermic filler to inorganic fibre is in the range 0.25 to 3.0 and the endothermic material includes 50-75%. The hydrated magnesium carbonate is Ultracarb HFD.

The amount of organic binder is less than 20%, about 4.5% in this embodiment. The binder is selected from various polymers and elastomers in latex form: a suitable binder being an acrylic resin type which provides excellent heat resistance, ongoing properties and non-corrosive combustion products. The material may also include Vermiculite-sodium silicate or other suitable filler material.

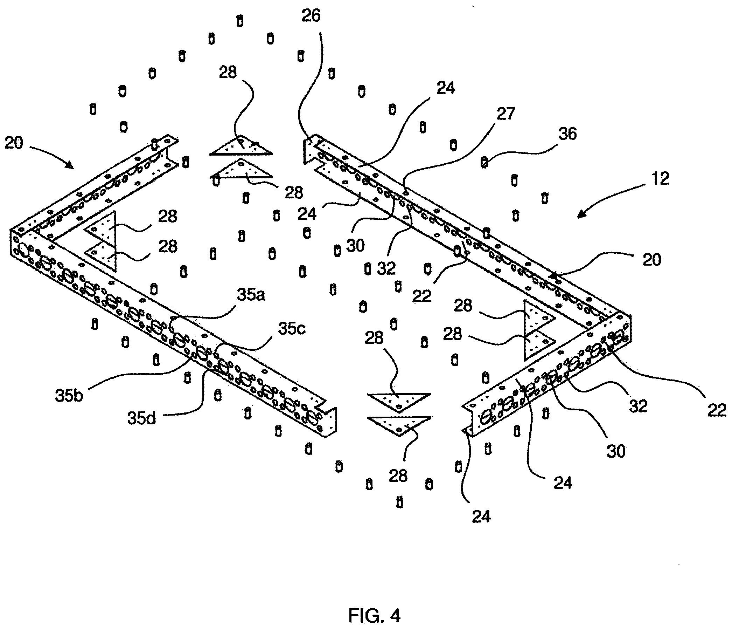

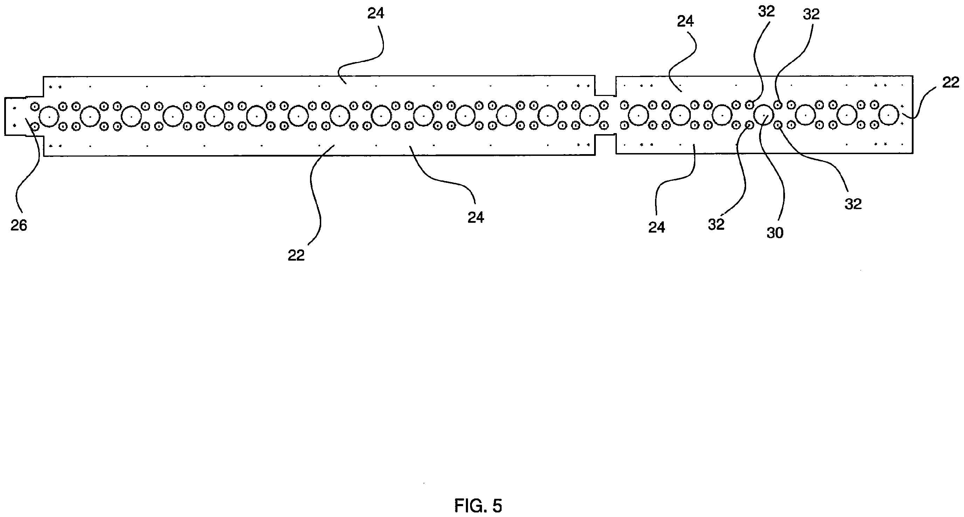

Referring to Figure 4, the frame units 12 are rectangular in shape. Each frame unit 12 is formed using two frame members 20. Each frame member 20 is substantially L-shaped and the frame members 20 connect together to form a frame unit 12. One of the frame members 20 is shown in an unfolded ("flat-pack") configuration in Figure 5.

The frame member 20 includes a side face 22 that connects to another frame unit 12 or to an external structure. A flap 24 of the flat-pack frame member 20 folds substantially perpendicularly to the side face 22 to form a portion of a perimeter around the frame unit 12 to which the heat resistant panel 14 can be attached. In this embodiment, a flap 24 is positioned on two opposing sides of the side face 22 so as to create a perimeter on both of the fire-facing sides of the frame unit 12. A flap 26 at one longitudinal end of the flat-pack frame member 20 is folded substantially perpendicularly to the side 22 so as to form a surface to which the other frame member 22 can connect to form the frame unit 20.

A series of holes are provided along the side 22 of the frame member 20 of the frame unit 12. The holes are of two sizes, namely axially aligned larger diameter holes 30 and axially aligned smaller diameter holes 32. The smaller diameter holes 32 are positioned to surround the larger diameter holes 30 with equal spacing.

A series of holes 27 are provided along the perimeter 24 of the frame unit 12 (not shown in Figure 5 for clarity) for receiving a fastener for connection of the heat resistant panels 14a, 14b to the frame unit 12.

In this embodiment the frame members 20 are manufactured from galvanised carbon steel. However, in alternative embodiments any suitable metal or material may be used.

Referring to Figures 1 to 4, the frame units 12 are connected together using a fastener, e.g. a bolt, received through the smaller holes 30. In this embodiment, the position of the fasteners is alternated to create a zig-zag pattern of bolts, as illustrated by the shaded holes 35a, 35b, 35c and 35d. The holes 30 not used for attachment contribute to reducing heat build-up in the frame unit 12 during a fire situation.

Ferrules 36 are positioned through each fire resistant panel 14a, 14b. A fastener 38 extends through the frame unit 12, the ferrule 36, and the cover panel 16. A nut or cap secures the cover panel 16 and the heat resistant panels 14a, 14b with respect to the fastener 38, so as to attach the fire resistant panels 14a, 14b and the cover panel 16 to the frame unit 12.

It can be seen from the exploded view shown in Figure 2, that a central region of the frame unit defines a void. This creates a series of hollow regions 40 between the two fire-facing walls of the firewall. Such a hollow region reduces heat flow through the firewall. It also enables electrical cables and/or wires to be run through the firewall uninhibited, e.g. with limited effect on current flow (during a non-fire situation). Further, the holes 30 and 32 of the frame units 12 can be used to route cables and pipes within and through the firewall. Such arrangement of cables and pipes can protect the cables and pipes usually for up to at least 50% of the duration of protection provided by the firewall 10, without any requirement for additional fire protection of the cables and pipes.

To assemble the firewall 10, first the required number of frame members 20 are bent to form the required number of frame units 12. That is, the flaps 24 and 26 of the frame member 20 are bent perpendicular to the side 22. A first portion of the frame member 21a is then bent substantially perpendicular to a second portion 21b of the frame member 20. Two bent frame members are then bolted together via the end flaps 26. The required number of frame units 12 are assembled in the same manner.

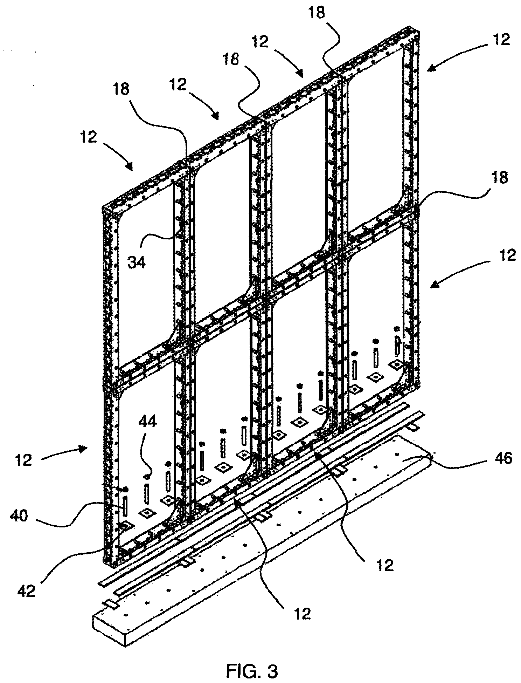

The frame units 12 are then bolted together using the smaller holes 32, as discussed previously. Strips of the expandable gasket 18 are positioned to extend along and cover each of the side faces 22 of each of the frame units 12. Referring to Figure 3, the assembled frame structure is then connected to an external structure 46. In this embodiment the external structure 46 is a concrete support. The frame structure is connected to the external structure 46 using a plurality of two part fasteners, and a plurality of plates 42 dimensioned to be of greater width than the diameter of the larger hole 30 of the frame unit 12. A threaded portion 44 of the two part fastener passes through the plate 42, through one of the larger holes 30, and into the external structure 46. A head 44 of the two part fastener secures the plate against the frame unit 12 so as to attach the frame unit to the external structure 46. In alternative embodiments, any other suitable method of attachment of the firewall 10 to an external structure 46 may be used.

The refractory paper 15 is positioned on each of the perimeters of the frame units 12 formed by sides 24 of the frame members. The refractory paper 15 being positioned so as to be substantially coincident with the frame unit 12, and overlapping any adjacent frame units. The fire resistant panels 14a, 14b and cover panels 16 are attached to the frame units using fasteners 38.

In the presently described embodiment, the firewall has the overall thickness of 200 mm to 210 mm. Each fire resistant panel 14a, 14b is 20 to 30 mm thick. The frame unit 12 is 100 to 110 mm thick, and formed from a sheet metal of 2 mm thickness. Each frame unit and panel has an area of wall coverage of 1520 to 1540 mm by 770 to 790 mm, but in alternative embodiments, any suitable dimensions may be used.

The firewall 10 of the described embodiment was tested using standard 3 hour fire testing. To pass the test no part of the firewall on the opposite side to the fire should reach 181°C in a period of 3 hours. When tested, the described firewall reached a maximum temperature of approximately 70°C in a period of 4 hours. It was also found that there was no significant bowing of the firewall, indeed the bowing was substantially reduced compared to a firewall of the prior art.

The firewall 10 was further subjected to seismic tests and found to out perform the firewalls of the prior art.

As well as providing improved performance in fire tests, the modular nature of firewall 10 also provides improved ease of assembly and flexibility of assembly. This is because the frame units can be assembled as required to form a firewall of the desired dimensions and including any desired features, such as a door frame. The removable nature of the fire resistant panels 14a, 14b and the frame units 12 from the firewall 10 also means that the firewall can be easily modified to accommodate, e.g. a door or pipe conduit, as required.

The ability to connect the firewall 10 to an external structure 46 using the fasteners and plates provides increased flexibility of where to position the firewall because it is not dependent upon the provision of the steelwork necessary to erect firewalls of the prior art.

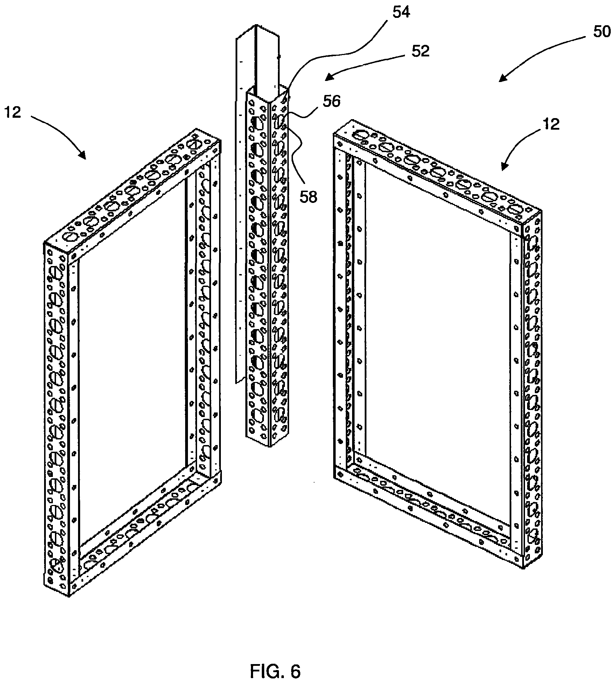

In alternative embodiments, the firewall may be arranged to extend around a corner, an example of such a configuration is indicated generally at 50 in Figure 6. To extend around a corner a corner frame member 52 is used. The corner frame member 52 comprises two frame members 54, each bent so as to form a substantially L-shaped member and then connected together using fasteners. The corner member 52 includes larger diameter holes 56 and smaller diameter holes 58 of similar configuration as the holes in the frame unit 12.

In a further alternative embodiment, the firewall may be constructed so as to accommodate a fire door. In this embodiment, the frame units 12 are connected together as previously described, but are arranged to leave a space in the firewall for accommodating a fire door. In exemplary embodiments, door frame members may then be positioned around the edge of the space, ready for supporting the fire door. The door frame members may be of any suitable form.

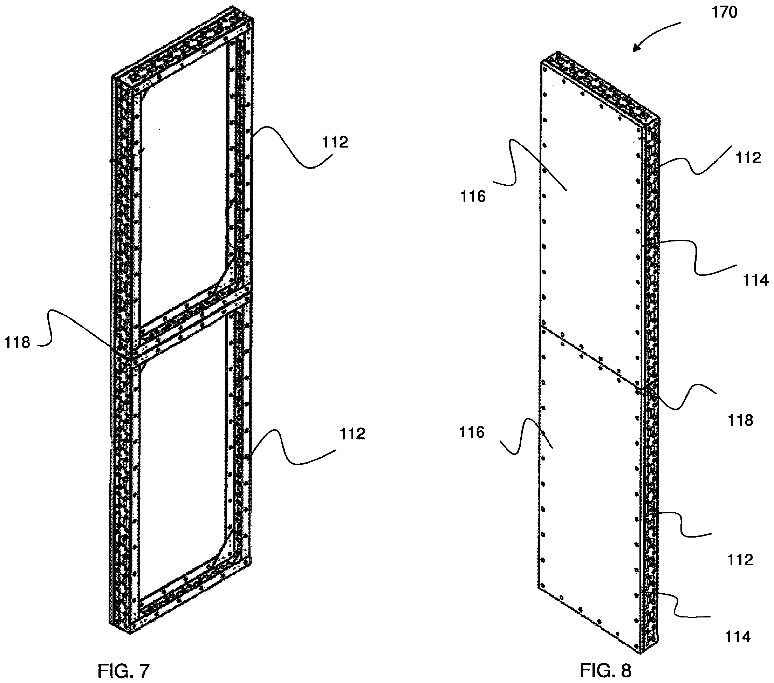

The fire door may be of standard construction. Alternatively, the fire door may be of a similar construction to the firewall 10. An example is shown in 8, indicated generally at 170. The fire door 170 includes a substructure formed from a plurality of frame units 112 (shown clearly in Figure 7). One or more fire resistant panels 114 are then clad to the substructure (see Figure 8), and one or more cover panels 116 may be clad to the fire resistant panels 114. An expanding gasket 118 may be positioned between the frame units 112. A heat seal may also be also positioned in a similar manner between the heat resistant panels 114 and the frame units 112, and dimensioned so as to overlap between adjacent heat resistant panels, in a similar manner to that described for the firewall 10. Appropriate door furniture can then be used to complete the door construction. An example of appropriate door furniture is the Sure McGill 3 point latch and hinges, available from Sure McGill Ltd, 26 The Business Centre, Molly Millars Lane, Wokingham, Berkshire RG41 2QY.

Although the invention has been described above with reference to one or more preferred embodiments, it will be appreciated that various changes or modifications may be made without departing from the scope of the invention as defined in the appended claims. For example, in alternative embodiments the described construction or similar, may be used to form other types of fire resistant structures, for example fire resistant ceilings, or barriers between fire prone structures such as transformers.

## Claims

1. A firewall having a fire resistant structure (10), the fire resistant structure comprising:
a plurality of modular metallic frame units (12) attached together to form a substructure of the firewall ;
wherein each metallic frame unit (12) has a front face and a rear face, further wherein each metallic frame unit (12) is square or rectangular in shape so as to define an upper end face and a lower end face;
a plurality of fire resistant panels (14a, 14b) arranged to clad the substructure of the firewall, wherein the front face of each metallic frame unit (12) is covered by a respective fire resistant panel of said plurality of fire resistant panels (14a, 14b), so as to provide a fire-facing face of the substructure of the firewall, and the rear face of each metallic frame unit (12) is covered by a respective fire resistant panel of said plurality of fire resistant panels (14a, 14b) or a non-fire resistant panel, so as to form a hollow region (40) between said front face and said rear face;
wherein the firewall comprises a first metallic frame unit (12) of said plurality of modular metallic frame units (12) and a second metallic frame unit (12) of said plurality of modular metallic frame units (12),
wherein the lower end face of the first metallic frame unit (12) is arranged adjacent the upper end face of the second metallic frame unit (12), such that the first and second metallic frame units (12) are arranged one above the other, with the first metallic frame unit (12) uppermost;
**characterised in that**:
the firewall comprises a gasket (18) positioned between the lower end face of said first metallic frame unit (12) and the upper end face of said second metallic frame unit (12) to retard heat transfer from the lower metallic frame unit (12) to the upper metallic frame unit (12), wherein the gasket (18) is configured to cover the respective end face of said first and second metallic frame units (12).

2. The firewall according to claim 1 wherein fire resistant panels (14a, 14b) clad said front and rear faces.

3. The firewall according to any preceding claim, wherein each of the plurality of fire resistant panels (14a, 14b) comprises an endothermic-reactive insulating fibrous material.

4. The firewall according to claim 3, wherein the insulating fibrous material includes:
(i) an inorganic endothermic filler which undergoes multiple endothermic reactions between the range of 100°C and 750°C;
(ii) inorganic fiber material; and
(iii) an inorganic polymer binder.

5. The firewall according to any one of the previous claims, wherein the frame units (12) comprise a plurality of holes (30, 32) along a side (22) for providing a position of attachment to another frame unit (12) or external structure, and/or for reducing heat build-up in the frame unit (12).

6. The firewall according to any one of the previous claims comprising a heat resistant seal (15) positioned between the frame units (12) and fire resistant panels (14a, 14b), the heat resistant seal (15) being positioned around a perimeter of a front face of each frame unit (12) and dimensioned to overlap the front face of an adjacent frame unit (12), so as to prevent heat leakage between fire resistant panels (14a, 14b).

7. The firewall according to any one of the previous claims, wherein the frame units (12) are made from steel.

8. The firewall according to any one of the previous claims, wherein each frame unit comprises a series of holes (27) on a perimeter (24) of a front and/or rear face, and one or more of said holes (27) receives a fastener to attach one of the fire resistant panels (14a, 14b) to said frame unit (12).

9. The firewall according to claim 8, wherein the fastener is a threaded fastener.

10. The firewall according to claim 8 or 9, wherein the one or more fasteners extend through one of the fire resistant panels (14a, 14b) to suspend the fire resistant panel (14a, 14b) to the frame unit (12).

11. The firewall according to claim 10, wherein a ferrule (36) is positioned through the fire resistant panel (14a, 14b) at a position coincident with the fastener so as to reduce or prevent direct contact of the fastener with the fire resistant panel (14a, 14b).

12. The firewall according to any one of the previous claims, comprising a cover panel (16) positioned over the fire resistant panels 14a, 14b) to cover a fire-facing side of the firewall.

## Patentansprüche

1. Brandschutzwand mit einer feuersicheren Struktur (10), wobei die feuersichere Struktur Folgendes umfasst:
eine Vielzahl von modularen metallischen Rahmeneinheiten (12), die miteinander verbunden sind, um eine Unterstruktur der Brandschutzwand zu bilden;
wobei jede metallische Rahmeneinheit (12) eine vordere Fläche und eine hintere Fläche aufweist, ferner:
wobei jede metallische Rahmeneinheit (12) eine quadratische oder rechteckige Form aufweist, so dass sie eine obere Endfläche und eine untere Endfläche definiert;
eine Vielzahl von feuerbeständigen Platten (14a, 14b), die so angeordnet sind, dass sie die Unterstruktur der Brandschutzwand bedecken, wobei die Vorderseite jeder metallischen Rahmeneinheit (12) durch eine entsprechende feuerbeständiges Platte aus der Vielzahl von feuerbeständigen Platten (14a, 14b) abgedeckt ist, um so eine dem Feuer zugewandte Fläche der Unterstruktur der Brandschutzwand bereitzustellen, und wobei die hintere Fläche jeder metallischen Rahmeneinheit (12) durch eine jeweilige feuerbeständige Platte aus der Vielzahl von feuerbeständigen Platten (14a, 14b) oder eine nicht feuerbeständige Platte abgedeckt ist, um so einen hohlen Bereich (40) zwischen der vorderen Fläche und der hinteren Fläche zu bilden;
wobei die Brandschutzwand eine erste metallische Rahmeneinheit (12) aus der Vielzahl von modularen metallischen Rahmeneinheiten (12) und eine zweite metallische Rahmeneinheit (12) aus der Vielzahl von modularen metallischen Rahmeneinheiten (12) umfasst,
wobei die untere Endfläche der ersten metallischen Rahmeneinheit (12) angrenzend an die obere Endfläche der zweiten metallischen Rahmeneinheit (12) angeordnet ist, so dass die erste und die zweite metallische Rahmeneinheit (12) übereinander angeordnet sind, wobei die erste metallische Rahmeneinheit (12) zuoberst liegt;
**dadurch gekennzeichnet, dass**
die Brandschutzwand eine Dichtung (18) umfasst, die zwischen der unteren Endfläche der ersten metallischen Rahmeneinheit (12) und der oberen Endfläche der zweiten metallischen Rahmeneinheit (12) angeordnet ist, um die Wärmeübertragung von der unteren metallischen Rahmeneinheit (12) zur oberen metallischen Rahmeneinheit (12) zu verzögern, wobei die Dichtung (18) so konfiguriert ist, dass sie die jeweilige Endfläche der ersten und der zweiten metallischen Rahmeneinheit (12) abdeckt.

2. Brandschutzwand nach Anspruch 1, wobei feuerbeständige Platten (14a, 14b) die Vorder- und Rückseiten verkleiden.

3. Brandschutzwand nach einem der vorhergehenden Ansprüche, wobei jede der mehreren feuerbeständigen Platten (14a, 14b) ein endotherm reaktives, isolierendes Fasermaterial aufweist.

4. Brandschutzwand nach Anspruch 3, wobei das isolierende Fasermaterial Folgendes enthält:
(i) einen anorganischen endothermen Füllstoff, der mehrere endotherme Reaktionen im Bereich von 100°C bis 750°C durchläuft,
(ii) ein anorganisches Fasermaterial und
(iii) ein anorganisches Polymerbindemittel.

5. Brandschutzwand nach einem der vorhergehenden Ansprüche, wobei die Rahmeneinheiten (12) eine Vielzahl von Löchern (30, 32) entlang einer Seite (22) aufweisen, um eine Position zur Befestigung an einer anderen Rahmeneinheit (12) oder einer externen Struktur bereitzustellen und/oder um den Wärmestau in der Rahmeneinheit (12) zu verringern.

6. Brandschutzwand nach einem der vorhergehenden Ansprüche mit einer hitzebeständigen Abdichtung (15), die zwischen den Rahmeneinheiten (12) und den feuerbeständigen Platten (14a, 14b) angeordnet ist, wobei die hitzebeständige Abdichtung (15) um einen Umfang einer Vorderseite jeder Rahmeneinheit (12) herum angeordnet und so dimensioniert ist, dass sie die Vorderseite einer benachbarten Rahmeneinheit (12) überlappt, um so ein Entweichen von Wärme zwischen den feuerbeständigen Platten (14a, 14b) zu verhindern.

7. Brandschutzwand nach einem der vorhergehenden Ansprüche, wobei die Rahmeneinheiten (12) aus Stahl hergestellt sind.

8. Brandschutzwand nach einem der vorhergehenden Ansprüche, wobei jede Rahmeneinheit eine Reihe von Löchern (27) an einem Umfang (24) einer vorderen und/oder hinteren Fläche aufweist und wobei eines oder mehrere der Löcher (27) ein Befestigungsmittel aufnehmen, um eine der feuerbeständigen Platten (14a, 14b) an der Rahmeneinheit (12) zu befestigen.

9. Brandschutzwand nach Anspruch 8, wobei das Befestigungsmittel ein mit Gewinde versehenes Befestigungsmittel ist.

10. Brandschutzwand nach Anspruch 8 oder 9, wobei sich das eine oder die mehreren Befestigungsmittel durch eine der feuerbeständigen Platten (14a, 14b) hindurch erstrecken, um die feuerbeständige Platte (14a, 14b) an der Rahmeneinheit (12) aufzuhängen.

11. Brandschutzwand nach Anspruch 10, bei der eine Hülse (36) durch die feuerbeständige Platte (14a, 14b) an einer Stelle angeordnet ist, die mit dem Befestigungselement zusammenfällt, um den direkten Kontakt des Befestigungselements mit der feuerbeständigen Platte (14a, 14b) zu verringern oder zu verhindern.

12. Brandschutzwand nach einem der vorhergehenden Ansprüche mit einer Abdeckplatte (16), die über den feuerbeständigen Platten (14a, 14b) angeordnet ist, um eine dem Feuer zugewandte Seite der Brandschutzwand abzudecken.

## Revendications

1. Paroi pare-feu ayant une structure ignifugée (10), cette structure ignifugée comprenant :
- un ensemble d'unité de cadres métalliques modulaires (12) fixés les uns aux autres pour former une sous-structure de la paroi pare-feu,
- chaque unité de cadre métallique (12) ayant une face avant et une face arrière et de plus,
- chaque unité de cadre métallique (12) est de forme carrée ou rectangulaire pour définir une surface d'extrémité supérieure et une surface d'extérieure inférieure,
- un ensemble de panneaux ignifugés (14a, 14b) étant disposés pour couvrir la sous-structure de la paroi pare-feu,
* la face avant de chaque unité de cadre métallique (12) étant couverte par un panneau ignifugé respectif de l'ensemble des panneaux ignifugés (14a, 14b) de façon à constituer une surface faisant face au feu de la structure de la paroi ignifugée et la face arrière de chaque unité de cadre métallique (12) est couverte par un panneau ignifugé respectif de l'ensemble des panneaux ignifugés (14a, 14b) ou un panneau non résistant au feu pour former une région creuse (40) entre la face avant et la face arrière :
la paroi pare-feu comprenant une première unité de cadre métallique (12) parmi l'ensemble des unités de cadres métalliques modulaires (12) et une seconde unité de cadre métallique (12) de l'ensemble des unités de cadres métalliques modulaires,
dans laquelle
la face d'extrémité inférieure de la première unité de cadre métallique (12) est disposée pour être adjacente à la face d'extrémité supérieure de la seconde unité de cadre métallique (12) de façon que la première et la seconde unité de cadre métallique (12) soient organisées l'une au-dessus de l'autre, la première unité de cadre métallique étant au-dessus,
paroi pare-feu **caractérisée en ce qu'**elle comprend :
une garniture (18) placée entre la surface d'extrémité inférieure de la première unité de cadre métallique (12) et la surface d'extrémité supérieure de la seconde unité de cadre métallique (12) de façon à retarder le transfert de chaleur de l'unité de cadre métallique la plus basse (12) vers l'unité de cadre métallique la plus haute, les garnitures (18) étant configurées chacune pour couvrir la surface d'extrémité respective de la première unité de cadre métallique (12) et de la second unité de cadre métallique.

2. Paroi pare-feu selon la revendication 1,
dans laquelle
les panneaux ignifugés (14a, 14b) couvrent la face avant et la face arrière.

3. Paroi pare-feu selon l'une quelconque des revendications précédentes,
dans laquelle
chacun des panneaux ignifugés (14a, 14b) de l'ensemble des panneaux comprend une matière fibreuse isolante, à réaction endothermique.

4. Paroi pare-feu selon la revendication 3,
dans laquelle
la matière fibreuse isolante comprend :
i) une charge endothermique inorganique qui résiste à plusieurs réactions endothermiques à des températures entre 100°C et 750°C,
ii) une matière de fibres minérales,
iii) liant polymère inorganique.

5. Paroi coupe-feu selon l'une quelconque des revendications précédentes,
dans laquelle
les unités de cadres (12) comprennent un ensemble d'orifices (30, 32) le long d'un côté (22) pour créer une position de fixation à une autre unité de cadre (12) ou à une structure extérieure et/ou réduire la chaleur accumulée dans l'unité de cadre (12).

6. Paroi coupe-feu selon l'une quelconque des revendications précédentes,
comprenant :
un joint ignifugé (15) entre les unités de cadres (12) et les panneaux ignifugés (14a, 14b), le joint ignifugé (15) étant positionné sur du périmètre de la face frontale de chaque unité de cadre (12) et dimensionné pour chevaucher la face avant d'une unité de cadre adjacente (12) de façon à éviter une fuite de chaleur entre les panneaux ignifugés (14a, 14b).

7. Paroi coupe-feu selon l'une quelconque des revendications précédentes,
dans laquelle
les unités de cadres (12) sont faites en acier.

8. Paroi coupe-feu selon l'une quelconque des revendications précédentes,
dans laquelle
chaque cadre comporte une série d'orifices (27) sur un périmètre (24) de la face avant et/ou de la face arrière et un ou plusieurs de ces orifices (27) reçoivent un moyen de fixation pour fixer l'un des panneaux ignifugés (14a, 14b) à cette unité de cadre (12).

9. Paroi pare-feu selon la revendication 8,
dans laquelle
le moyen de fixation est un moyen de fixation fileté.

10. Paroi coupe-feu selon la revendication 8 ou 9,
dans laquelle
un ou plusieurs moyens de fixation traversent l'un des panneaux ignifugés (14a, 14b) pour suspendre le panneau ignifugé (14a, 14b) à l'unité de cadre (12).

11. Paroi coupe-feu selon la revendication 10,
dans laquelle
un manchon (36) est placé à travers le panneau ignifugé (14a, 14b) dans une position qui coïncide avec la fixation de manière à réduire ou éviter le contact direct de l'organe de fixation et du panneau ignifugé (14a, 14b).

12. Paroi pare-feu selon l'une quelconque des revendications précédentes,
comprenant un panneau de couverture (16) placé par-dessus les panneaux ignifugés (14a, 14b) pour couvrir le côté face au feu de la paroi pare-feu.
